# FASCICULE DE BREVET EUROPEEN

(11) **EP 0 906 170 B1**
(45) Date de publication et mention de la délivrance du brevet: **01.12.1999**
(21) Numéro de dépôt: 97926091.6
(22) Date de dépôt: 03.06.1997
(51) Int. Cl.: B23Q 1/00, B23Q 1/01

(54) **MACHINE-OUTIL D'USINAGE A GRANDE VITESSE ADOPTANT UNE DISPOSITION ERGONOMIQUE POUR SES PARTIES FONCTIONNELLES**
WERKZEUGMASCHINE ZUR BEARBEITUNG BEI HOHER GESCHWINDIGKEIT MIT ERGONOMISCHER ANORDNUNG VON FUNKTIONSTEILEN
MACHINE-TOOL FOR HIGH SPEED MACHINING ADOPTING AN ERGONOMIC ARRANGEMENT FOR ITS FUNCTIONAL PARTS

(30) Priorité: 04.06.1996 FR 9607129
(43) Date de publication de la demande: 07.04.1999
(73) Titulaire: RENAULT-AUTOMATION, 92109 Boulogne Billancourt (FR)
(72) Inventeur: AZEMA, André, F-81710 Saix (FR)
(74) Mandataire: Richebourg, Michel François
(86) Numéro de dépôt international: FR9700976
(87) Numéro de publication internationale: WO9746352

(56) Documents cités:
- EP-A- 0 203 035
- DE-C- 431 334
- US-A- 5 503 082

## Description

La présente invention a trait au domaine des machines-outils et concerne plus particulièrement la disposition des parties fonctionnelles d'une machine-outil d'usinage à grande vitesse afin d'en assurer la manutention et l'entretien dans les meilleures conditions.

L'usinage à grande vitesse s'opère en général à partir d'un outil entraîné en rotation par l'axe moteur d'une électro-broche installée dans coulant lui-même monté mobile en translation selon trois axes X, Y, et Z.

Une machine-outil d'usinage comporte classiquement quatre postes de travail principaux, à savoir :
- un poste d'usinage proprement dit comportant l'outil entraîné en rotation par l'axe moteur de l'électro-broche et façonnant la pièce à usiner,
- un poste d'entraînement situé en amont du poste d'usinage et constitué d'un ensemble d'organes assurant notamment les déplacements en translation suivant X, Y et Z du coulant de l'électro-broche ainsi que l'alimentation de l'électro-broche pour la rotation de son axe porte-outil,
- un poste de commande collaborant avec le poste d'entraînement et en fonction d'un programme d'instructions préétablies pour assumer les différentes phases d'usinage de ladite pièce,
- et un magasin de rangement des outils permettant de garder à proximité de la zone d'usinage les outils utilisés lors des différentes phases d'usinage de la pièce.

Le poste d'usinage comporte l'outil ou broche usinant la pièce qui est entraîné par l'axe moteur de l'électro-broche alimentée en électricité par des câbles venant du poste de commande. Cette électro-broche est logée dans un coulent mobile suivant les trois axes X, Y, Z.

Le poste d'entraînement comporte tous les éléments moteurs assurant les mouvements du coulant suivant les trois axes X, Y, Z.

Le poste de commande est en liaison avec un groupe électrique et un groupe hydraulique lorsque cela est nécessaire ayant pour fonction de distribuer' l'énergie électrique et hydraulique et d'assurer la commande des éléments se servant desdites énergies.

Ces machines-outils ont pour fonction l'usinage dans un minimum de temps et un maximum de précision de pièces dont les formes sont de plus en plus complexes et qui demandent la présence de plusieurs outils (disponibles grâce au magasin situé à proximité) ou même de plusieurs machines-outils pour assurer leur usinage complet. Une configuration comportant plusieurs de ces machines-outils participant à l'usinage d'une même pièce s'appelle une machine transfert qui peut devenir un atelier flexible assurant l'usinage complet de plusieurs pièces différentes. Une machine transfert est un ensemble de machines-outils qui sont disposées perpendiculairement à la ligne d'avancée de la pièce afin de réaliser toutes les phases d'usinage de celle-ci. Une telle installation se fait en respectant des contraintes de dimension des machines et surtout de leur surface au sol. Il est donc primordial, pour des raisons de coût et d'espace occupé, que les machines-outils soient compactes afin de permettre l'installation d'un atelier flexible ou d'une machine transfert. En effet, de telles machines ont pour principal inconvénient de demander une surface au sol très grande, malgré la miniaturisation des composants que l'on peut obtenir aujourd'hui. La taille de la machine correspond avant tout à l'usinage que l'on veut faire : pour qu'une machine-outil puisse être flexible elle doit s'adapter à tous les types d'usinage et à toutes les dimensions. Dans tous cas, l'electro-broche sera de grandes dimensions pour assurer une vitesse de rotation élevée à l'outil ou un grand couple afin de pouvoir utiliser des outils de grandes dimensions entraînant un dimensionnement conséquent du coulant et donc des éléments moteurs assurant ses mouvements selon les trois axes X, Y, Z. Dans le domaine auquel l'invention s'applique, les machines-outils sont de très grandes dimensions, de sorte que les entreprises ne possédant pas de surfaces suffisamment grandes pour recevoir une machine-outil d'usinage à grande vitesse ou plusieurs de ces machines, doivent engager des travaux d'agrandissement de leurs locaux ce qui grève considérablement le coût d'installation de ces machines indépendamment de leur coût intrinsèque.

Un autre inconvénient des machines-outils d'usinage est le fait qu'il est nécessaire d'autoriser un accès à tous les éléments fonctionnels de la machine pour en assurer la maintenance. En conséquence, des zones d'accès permettant à un opérateur d'assurer la maintenance des organes vitaux de la machine notamment ceux du poste d'entraînement, doivent être laissées autour des portes, trappes ou fenêtres qui, conçues pour assurer la maintenabilité de la machine-outil, augmentent la surface au sol nécessaire à l'implantation de chaque machine-outil. En configuration transfert, ces espaces augmentent donc la surface au sol nécessaire à l'installation de la machine-outil ainsi que le nombre de convoyeurs d'une machine à une autre.

Un autre inconvénient de ces machines-outils d'usinage à grande vitesse est qu'elles nécessitent la présence d'un groupe de refroidissement. En effet, l,opération d'usinage élève les pièces du poste d'entraînement à un degré de temperature qui serait dommageable pour la durée de vie de celles-ci si un refroidissement annexe n'était pas mis en place, en outre celle hausse de température pourrait entraîner la dilatation des pièces du poste d'entraînement ce qui aurait pour conséquence une perte sensible de précision dans l'usinage des pièces. Ces groupes de refroidissement sont en général de grandes dimensions et difficiles à intégrer dans l'ensemble machine-outil.

Partant de ces constatations, la demanderesse a donc imaginé une configuration originale d'une machine-outil afin de permettre une diminution de la surface au sol de la machine-outil tout en facilitant l'accès aux organes vitaux pour la manutention. Cette configuration repose sur une disposition ergonomique flexible des parties fonctionnelles permettant d'obvier aux inconvénients précités.

Suivant l'invention, la machine-outil d'usinage à grande vitesse du type de celle comprenent un module mécanique comportant un poste d'usinage et un poste d'entraînement et un module équipement constitué de n parties distinctes situé en amont, est remarquable en ce que les bases desdits modules sont liées à un même châssis-support de façon fixe pour le module mécanique et de façon coulissante sur l'axe longitudinal de la machine pour le module équipement, les différentes parties mobile de ladite machine-outil adoptant deux positions :
- une première position, dite "repliée", pendant laquelle le module équipement et toutes ses parties sont accolées entre elles ainsi qu'au module mécanique,
- une deuxième position, dite "déployée", pendant laquelle le module équipement dans son ensemble ou un sous-ensemble des parties le composant ont coulissé sur le châssis support vers l'arrière de façon à former un couloir de manutention transversal traversant la machine de part en part.

Cette disposition ergonomique flexible a pour avantage en ajoutant à la longueur nécessaire à l'installation d'une telle machine seulement la largeur d'un couloir, d'agrandir considérablement les zones d'accès aux organes vitaux de la machine en créant entre chaque module et chaque partie distinctes constituant le module un couloir de manutention le traversant de part en part. Cet aménagement a pour autre avantage de créer un espace de manutention traversant transversalement la machine-outil tout en permettant l'accès au centre de la machine a l'opérateur. Ainsi, l'accès pour la manutention ou l'entretien des organes à partir de l'intérieur de la machine-outil permet de garder les côtés de la machine-outil libre de tout élément nécessitant une intervention ou une manutention. Un autre avantage de cette disposition est qu'il est plus aisé d'atteindre les éléments moteurs d'une machine-outil à partir de sol, coeur que par rapport à un accès par côté.

En conséquence, au lieu de s'ouvrir sur le pourtour extérieur de la machine, les trappes d'accès peuvent s'ouvrir sur le couloir de manutention créé à cet effet par la séparation du poste de commande du poste d'entraînement. Un autre avantage de la présence du couloir de manutention est qu'une machine-outil peut se placer avec un côté accolé à un mur tout en restant entièrement opérationnelle et accessible pour son entretien. De plus, le fermeture et l'ouverture du couloir, permet , toujours en ajoutant sa largeur à la longueur d'installation, de placer la machine orientée de façon à ce que sa partie arrière soit accolée a un coin de mur, la fermeture du couloir en position "repliée" permettant l'accès à l'arrière de la machine et, l'ouverture du couloir entre les deux modules ou entre les parties du module équipement permettant l'accès aux éléments internes.

La position dite "repliée" a pour avantage de créer une machine compacte assurant de par sa fermeture du couloir de manutention de protéger les organes vitaux mécaniques, électriques et hydrauliques de l'environnement extérieur.

Selon une caractéristique particulièrement avantageuse de l'invention, la Machine-outil d'usinage a grande vitesse est remarquable en ce que la longueur du châssis-support sur laquelle coulisse le module équipement est telle que lorsque ce dernier coulisse, dans son ensemble ou en partie, vers l'arrière de la machine et arrive en fin de course pour passer d'une position repliée à une position déployée, il ouvre un couloir transversal permettant la manutention entre les deux modules et telle que lorsque ledit module équipement coulisse seulement en partie dans une direction quelconque, il ouvre le couloir de manutention entre les parties séparées et ferme le couloir précédemment ouvert.

Selon un mode de réalisation préférée de l'invention, la machine outil d'usinage à grande vitesse est remarquable en ce que son module équipement se compose de deux parties distinctes une armoire hydraulique accolée au module mécanique lors de la position repliée de la machine et un sous-ensemble regroupant un groupe de refroidissement et une armoire electrique situé à l'arrière de façon à ce que leur mouvement respectif crée deux couloirs de manutention, le premier s'ouvrant entre le module mécanique et le groupe hydraulique et le second entre le groupe hydraulique et le susdit sous-ensemble.

Selon un autre mode de réalisation préférée de l'invention, la machine-outil d'usinage à grande vitesse du type de celle comportant un poste d'usinage, un poste d'entraînement, un poste de commande et un pupitre de commande, les différents postes étant liés à un seul et même châssis-support commun, est remarquable en ce que les différents postes sont fixés audit châssis support commun de façon à ce que le poste d'usinage (P2) et le poste d'entraînement (P1) situé en amont de celui-ci soient séparés du poste de commande (P3) par un couloir (100) traversant transversalement ladite machine et permettant le passage d'un opérateur.

Deux machines-outils et même trois peuvent ainsi être placées en contact l'une de l'autre, leur axe Z parallèle, assurant ainsi un gain de place du fait de la suppression des espaces entre elles, auparavant nécessaires pour le passage d'un opérateur assurant la manutention par accès sur le côté. En outre, lorsque deux ou trois machines sont accolées latéralement, les couloirs de manutention, désormais fixes, traversent les machines-outils qui s'alignent assurant ainsi une communication entre eux d'une machine à l'autre.

Selon une autre caractéristique particulièrement avantageuse de l'invention, les différents modules de ladite machine-outil d'usinage à grande vitesse adoptent une forme sensiblement parallélépipédique et de même largeur que la machine assurant ainsi une parfaite symétrie par rapport à l'axe Z. La symétrisation de l'ensemble de la machine outil permet d'accoler plusieurs machine-outil côte à côte afin d'assurer une configuration compacte économisant les surfaces nécessaires. Ce gain de place au niveau des aires de dégagement permet lorsque la chaîne d'usiange comporte un grande nombre de machine d'intégrer plus de machine sur une même surface. De plus, la symétrisation apporte une simplification considérable lors de la fabrication et de l'étude de son intégration sur site en supprimant les contraintes d'aires de dégagement et de mise en place des accessoires comme le magasin d'outils ou le pupitre de commande qui peuvent se placer indifférement sur le côté droit ou le côté gauche de la machine suivant son implantation.

Les concepts fondamentaux de l'invention venant d'être exposés ci-dessus dans leur forme la plus élémentaire, d'autres détails et caractéstiques ressortiront plus clairement à la lecture de la description qui suit donnant à titre d'exemple non limitatif et en regard des dessins annexés, un mode de réalisation d'une machine-outil d'usinage à grande vitesse à disposition ergonomique des parties fonctionnelles conformé à l'invention. Cette description se réfère aux dessins annexés sur lesquels :
La figure 1 est une vue en perspective d'une machine-outil adoptant une telle disposition ergonomique des parties fonctionnelles.
La figure 2 est une vue de dessus d'une machine-outil adoptant une position figée du couloir et du poste de commande.
La figure 3 est une vue de dessus d'une machine transfert regroupant plusieurs machines-outils assurant l'usinage d'une pièce afin d'illustrer les possibilités de configuration que propose la disposition ergonomique des parties fonctionnelles des machines-outils d'usinage à grande vitesse de la figure 2.
Les figures 4a, 4b, 4c sont des vues de dessus de la machine-outil de la figure 1 adoptant plusieurs configurations.

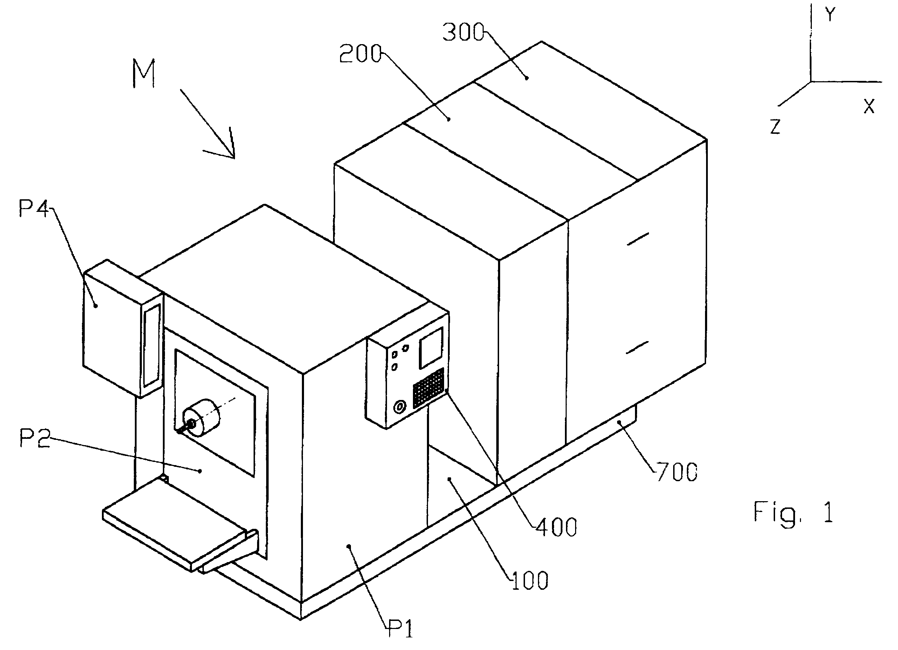

Telle qu'illustrée sur le dessin de la figure 1, la machine-outil d'usinage à grande vitesse référencée M dans son ensemble, se compose :
- d'un module mécanique regroupant le poste d'usinage P2, le poste d'entraînement P1 comportant tous les éléments moteurs et un poste d'emmagasinage P4 qui consiste en un magasin d'outils permettant de tenir disponibles, dans une enceinte hermétique, les outils nécessaires à la réalisation des différentes phases d'usinage que la machine-outil M doit réaliser.,
- d'un module équipement constitué par le poste de commande P3 regroupant plusieurs armoires et groupes d'énergie.

Selon la caractéristique principale de l'invention, les bases desdits modules sont liées à un même châssis-support 700 de façon fixe pour le module mécanique et de façon coulissante sur l'axe longitudinal de machine M pour le module équipement.

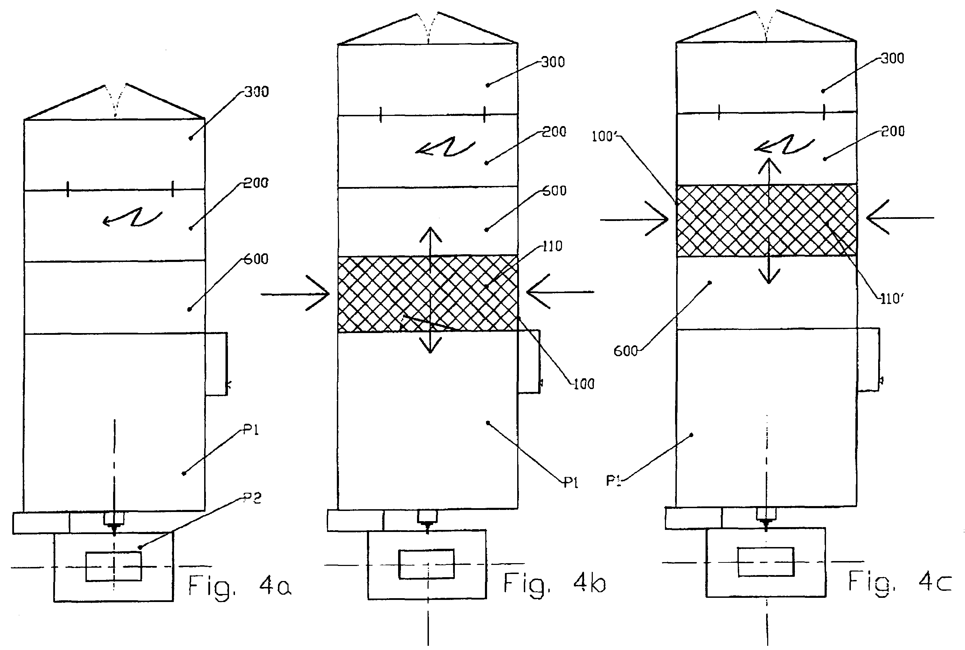

Telle qu'illustrée sur le dessin de la figure 4a, la susdite machine-outil d'usinage à grande vitesse Mest remarquable en ce que son module équipement se compose de deux parties distinctes une armoire hydraulique 600 accolée au module mécanique lors de la position repliée de la machine M telle qu'illustrée et un sous-ensemble regroupant un groupe de refroidissement 300 et une armoire électrique 200 situé à l'arrière de façon à ce que leur mouvement respectif crée deux couloirs de manutention.

Le premier couloir 100 s'ouvre entre le module mécanique contitué par le poste d'usinage P2 et le poste d'entraînement P1 et le groupe hydraulique 600 tel que le montre le dessin de de la figure 4b et permet donc l'accès à la trappe 500 du module d'entraînement P1 et aux organes de commande du groupe hydraulique se trouvant sur cette face de l'armoire du groupe hydraulique.

Le second couloir 100' s'ouvre par déplacement de l'armoire du groupe hydraulique vers le poste d'entraînement P1 jusqu'à la mise en butée sur celui-ci fermant ainsi le premier couloir 100, entre le groupe hydraulique 600 et le susdit sous-ensemble formé par le groupe de refroidissement 300 et l'armoire électrique telle que le montre le dessin de la figure 4c. Ce nouveau couloir 100' permet l'accès aux organes de commande hydraulique se trouvant de ce côte, du groupe hydraulique 600 et aux organes électriques se trouvant dans l'armoire électrique 200 en ouvrant les portes d'accès 210 et 220.

Selon un mode de réalisation préférée de l'invention, l'armoire constituée par le groupe hydraulique 600 ne possède pas de parois transversale du fait que lors de la position dite "repliée" les parois du poste d'entraînement P1 d'une part et de l'armoire électrique d'autre part ferment hermétiquement le parallépipède formé par l'armoire dudit groupe 600.

Selon un mode de réalisation préférée de l'invention, le module équipement constitué par le sous-ensemble formé par l'armoire életrique 200 et le groupe de refroidissement 300 d'une part et le groupe hydraulique d'autre part est monté coulissant en translation suivant des glissières longitudinales. Lorsque la machine M passe de la position repliée illustrée par la figure 4a à une position déployée illustrée par les figures 4b ou 4c le couloir de manutention 100 ou 100' est muni d'un caillebotis 110 ou 110' permettant le passage d'un opérateur entre les glissières, selon une caractéristique particulièrement judicieuse le deuxième caillebotis 110' est fixé à la base dudit groupe hydraulique 600 se solidarisant ainsi pour tous ses mouvements. Ledit deuxième caillebotis 110' venant se loger sous l'armoire électrique 200 lorsque ledit groupe hydraulique est accolé à ladite armoire électrique. Cette caractéristique a pour avantage de ne pas gêner le déplacement des flexibes d'alimentation en énergie communiquant, sous les armoires, entre les différentes parties du module équipement et entre les modules eux-mêmes par la présence d'un caillebotis fixe.

Selon un autre mode de réalisation préférée de l'invention la largeur du sous-ensemble constitué par le groupe de refroidissement 300 et l'armoire électrique 200 a une largeur égale à deux fois la largeur du groupe hydraulique et la longueur du châssis-support des glissières permettant le coulissement est telle que lorsque la machine adopte une position déployée la course totale du module équipement ou seulement du sous-ensemble ouvre un couloir dont la largeur est égale à la largeur du groupe hydraulique et donc à la moitié de la largeur du sous-ensemble. Cette caractéristique est particulièrement judicieuse car, comme illustrée sur le dessin de la figure 1, elle permet à la machine-outil M de se déployer sur une longueur supérieure à la longueur de glissement du châssis-support en permettant pour le sous-ensemble un porte-à-faux égal à la moitié de sa largeur. Une longeur de châssis inférieure permet de dégager de tout obstacle ou organe de guidage la zone arrière de la machine garantissant une compacité optimale de la machine M en position repliée.

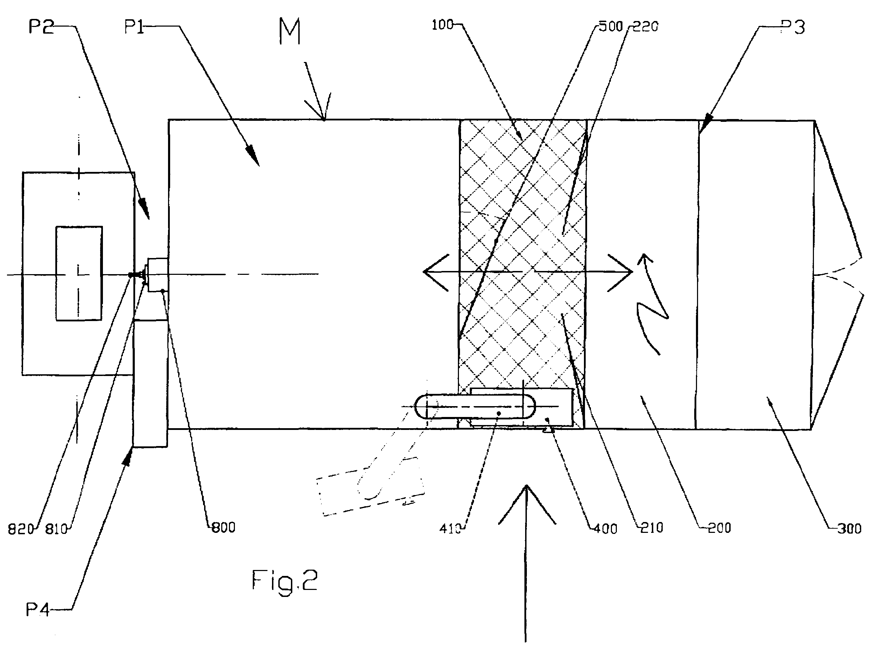

Tel que le montre le dessin de la figure 2, la machine-outil d'usinage à grande vitesse M selon un second mode de configuration illustrée se compose un poste d'usinage (P2), un poste d'entraînement (P1), un poste de commande (P3) et un pupitre de commande (400), les différents postes étant liés à un seul et même châssis-support commun. Cette machine-outil d'usinage est remarquable en ce que les différents postes sont fixés audit châssis support commun de façon à ce que le poste d'usinage (P2) et le poste d'entraînement (P1) situé en amont de celui-ci soient séparés du poste de commande (P3) par un couloir (100) traversant transversalement ladite machine et permettant le passage d'un opérateur. Le poste de commande P3 se compose ici d'une armoire électrique 200 assurant la distribution et la commande des organes électriques de la machine-outil M et d'un groupe de refroidissement 300 dont les commandes se trouvent côté couloir 100, assurant une température contrôlée aux organes sujets au réchauffement et à la déformation.

Selon un mode de réalisation particulièrement avantageux de l'invention, le susdit groupe de refroidissement (300) est situé et s'ouvre à l'arrière de ladite machine-outil (M) afin de donner l'accès à ses commandes à un opérateur. Cette disposition a pour avantage de laisser au refroidissement une entrée d'air s'ouvrant sur l'extérieur permettant une ventilation optimale. Cet avantage n'aurait pas été possible dans le cas où ledit groupe de refroidissement 300 aurait été situé entre l'armoire électrique 200 et le couloir 100. De plus, la susdite armoire (200) contenant les éléments électriques est située entre le groupe de refroidissement et le couloir de séparation (100) ses portes d'accès 210 et 220 s'ouvrant sur le couloir de manutentionCette disposition particulière a pour principal avantage de réunir tous les composants électriques de commande dans une même enceinte, celle-ci étant accessible par le couloir ne nécessitant donc pas de porte ou trappe d'accès sur le côté de la machine M.

Selon un mode de réalisation particulièrement avantageux de l'invention, un pupitre de commande de la machine 400 est placé dans le couloir 100 et est monté pivotant verticalement sur une potence 410 elle-même montée pivotante sur un axe vertical dressé sur le bâti de la machine-outil. Ainsi, soit le pupitre de commande 400 est en position tournée (tel que representé en traits discontinus sur le dessin) et le passage 100 est libre pour l'opérateur soit il est rentré a' l'intérieur du couloir 100 (tel que représenté en traits continus) permettant à l'ensemble machine-outil M de n'avoir aucun composant en "verrue" sur ses côtés.

Selon une autre caractéristique particulièrement avantageuse de l'invention le poste d'entraînement P1 est muni d'une trappe d'accès 500 s'ouvrant sur le couloir de manutention 100 permettant l'accès aux organes vitaux de la machine M , c'est à dire aux éléments d'entraînements moteurs assurant les déplacements du coulant 800 suivant les axes X, Y, Z dans lequel est logée l'élecro-broche 810 qui assure l'entraînement en rotation d'un outil ou broche 820.

Selon un mode de réalisation préférée de l'invention, la platine hydraulique servant à la distribution de l'énergie hydraulique se trouve dans le poste d'entraînement P1 de façon à être accessible par la trappe d'accès 500 du poste d'entraînement P1.

Le pupitre de commande de la machine 400 vient se loger par rotation (traits continus) de sa polence 410 sur lequel il est fixé, à l'intérieur du couloir de manutention 400. Il peut donc s'écarter afin de laisser le passage libre à un opérateur (traits discontinus). L'armoire électrique 200 et le groupe de refroidissement 300 sont de forme parallélépipédique ce qui facililite leur disposition dans l'ensemble compact de la machine-outil M et permet à celle-ci d'adapter une configuration parfaitement symétrique étant donné que le magasin d'outils et le pupitre de commande de la machine peuvent changer de côté.

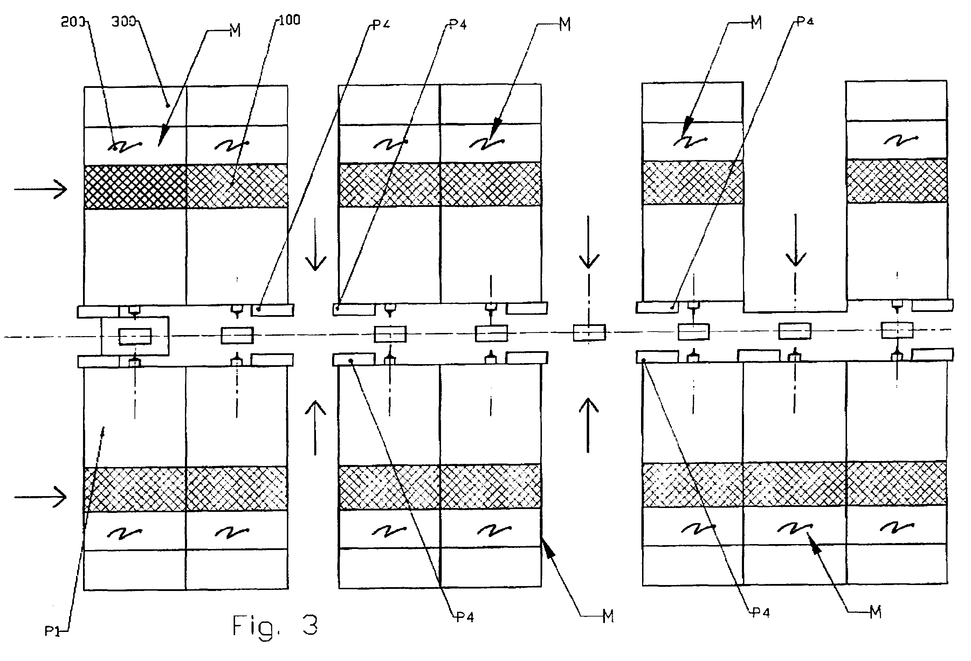

La machine transfert, telle qu'illustrée sur le dessin de la figure 3, montre plusieurs machines-outils d'usinage à grande vitesse M, disposées en chaîne d'usinage de façon à participer à l'usinage d'une pièce ou de plusieurs. De par la disposition particulière des parties fonctionnelles, ces machines peuvent être accolées par deux ou par trois en étant complètement opérationnelles du fait que la maintenance et l'entretien des organes vitaux tels que les éléments électriques dans l'armoire électrique 200 sont réalisés à partir de l'arrière de la machine et que les opérations de maintenance des éléments moteurs du poste d'entraînement P1 ou des organes du groupe de refroidissement 300 sont réalisés au coeur de la machine à partir du couloir de manutention 100. Les groupes de machines-outils accolées sont écartés de façon à permettre l'accès au poste d'usinage P2 et au magasin d'outils P4, celui-ci étant avantageusement placé du côté permettant l'accès. L'accès au magasin d'outils P4 et au poste d'usinage P2 d'une machine-outil située entre deux autres machines-outils est permis en ne plaçant pas de machine-outil en vis à vis de celle-ci. Une machine transfert réalisée avec ces machines-outils prend ainsi beaucoup moins se place qu'avec des machines-outils d'usinage à grande vitesse classiques.

Un autre avantage de la disposition ergonomique des parties fonctionnelles apparaissant en configuration transfert est que les couloirs de manutention 100 s'alignent pour former un grand couloir de manutention permettant de créer une ligne de manutention continue.

On comprend que la machine-outil d'usinage à grande vitesse adoptant une disposition ergonomique pour ses parties fonctionnelles qui vient d'être ci-dessus décrite et représentée, l'a été en vue d'une divulgation plutôt que d'une limitation. Bien entendu divers aménagements, modifications et améliorations pourrant être apportés à l'example ci-dessus, sans pour autant sortir du cadre de l'invention pris dans ses aspects et dans son esprit les plus larges. Ainsi, par exemple, plusieurs solutions technologiques pourront être adoptées pour assurer le déplacement desdites parties du module équipement ou du module dans son ensemble sur l'axe longitudinal de la machine.

Afin de permettre une meilleure compréhension des dessins, une liste des références avec leur légendes est ci-aprés énumérée.
- M: Machine-outil
- P1: Poste d'entraînement
- P2: Poste d'usinage
- P3: Poste de commande
- P4: Poste d'emmagasinage
- 100: Couloir de manutention
- 110, 110': Caillebotis
- 200: Armoire électrique
- 210,220: Portes de l'armoire électrique
- 300: Groupe de refroidissement
- 400: Pupitre de commande
- 410: Potence
- 500: Trappe d'accès au poste d'entraînement P1
- 600: Groupe hydraulique
- 700: châssis-support
- 800: Coulant
- 810: Electro-broche
- 820: Outil ou broche

## Revendications

1. Machine-outil d'usinage (M) à grande vitesse du type de celle comprenant un module mécanique comportant un poste d'usinage (P2) et un poste d'entraînement (P1) et un module équipement constitué de n parties distinctes situé en amont, CARACTERISEE PAR LE FAIT QUE les bases desdits modules sont liées à un même châssis-support (700) de façon fixe pour le module mécanique et de façon coulissante sur l'axe longitudinal de la machine (M) pour le module équipement, les différentes parties mobile de ladite machine-outil adoptant deux positions :
- une première position, dite "repliée", pendant laquelle le module équipement et toutes ses parties sont accolée's entre elles ainsi qu'au module mécanique,
- une deuxième position, dite "déployée", pendant laquelle le module équipement dans son ensemble ou un sous-ensemble des parties le composant ont coulissé sur le châssis support vers l'arrière de façon à former un couloir de manutention transversal (100) traversant la machine (M) de part en part.

2. Machine-outil d'usinage (M) à grande vitesse selon la revendication 1,CARACTERISEE PAR LE FAIT QUE la longueur du châssis-support (700) sur laquelle coulisse le module équipement est telle que lorsque ce dernier coulisse, dans son ensemble ou en partie, vers l'arrière de la machine (M) et arrive en fin de course pour passer d'une position repliée à une position déployée, il ouvre un couloir transversal (100) permettant la manutention entre les deux modules et telle que lorsque ledit module équipement coulisse, seulement en partie dans une direction quelconque, il ouvre le couloir de manutention (100') entre les parties séparées et ferme le couloir précédemment ouvert (100).

3. Machine-outil d'usinage (M) à grande vitesse selon la revendication 1, CARACTERISEE PAR LE FAIT QUE son module équipement se compose de deux parties distinctes un coupe hydraulique (600) accolée au module mécanique lors de la position repliée de la machine et un sous-ensemble regroupant un groupe de refroidissement (300) et une armoire électrique (200) situé à l'arrière de façon à ce que leur mouvement respectif crée deux couloirs de manutention(100 et 100'), le premier (100) s'ouvrant entre le module mécanique et le groupe hydraulique (600) et le second entre le groupe hydraulique (600) et le susdit sous-ensemble.

4. Machine-outil d'usinage (M) à grande vitesse selon la revendication 1, du type de celle comportant un poste d'usinage (P2), un poste d'entraînement (P1), un poste de commande (P3) et un pupitre de commande (400), les différents postes étant liés à un seul et même châssis-support commun, CARACTERISEE PAR LE FAIT QUE les différents postes sont fixés audit châssis support commun de façon à ce que le poste d'usinage (P2) et le poste d'entraînement (P1) situé en amont de celui-ci soient séparés du poste de commande (P3) par un couloir (100) traversant transversalement ladite machine et permettant le passage d'un opérateur

5. Machine-outil d'usinage à grande vitesse selon la revendication 4, du type de celle où le poste de commande (P3) comprend un groupe de refroidissement (300), CARACTERISEE PAR LE FAIT QUE le susdit groupe de refroidissement (300) est situé et s'ouvre à l'arrière de ladite machine-outil (M) afin de donner l'accès à ses commandes.

6. Machine-outil d'usinage à grande vitesse selon revendications 4 et 5, du type de celle où le poste de commande (P3) comprend un groupe de refroidissement (300) et une amioire électrique (200), CARACTERISEE PAR LE FAIT QUE la susdite armoire (200) contenant les éléments électriques est, située entre le groupe de refroidissement (300) et le couloir de séparation (100) ses portes d'accès s'ouvrant sur le couloir de manutention.

7. Machine-outil d'usinage à grands vitesse selon les revendications 1 à 6 prises ensemble, CARACTERISEE PAR LE FAIT QUE le susdit poste d'entraînement (P1) comporte à son arrière une trappe d'accès (500) débouchant latéralement dans le couloir (100) entre le poste d'entraînement (P1) et le poste de commande (P3).

8. Machine-outil d'usinage à grande vitesse selon les revendications 1 à 7 prises ensemble, CARACTERISEE PAR LE FAIT QUE le susdit pupitre de commande (400) est monté sur une potence (410) pivotante par rapport au bâti de la machine-outil (M) permettant au susdit pupitre de commande (400) de venir, par rotation de la potence (410), fermer et/ou ouvrir l'accès au couloir de manutention (100).

9. Machine-outil d'usinage à grande vitesse selon les revendications 1 à 8 prises ensemble, CARACTERISEE PAR LE FAIT QUE la platine hydraulique servant à la distribution de l'énergie hydraulique se trouve dans le poste d'entraînement (P1) de façon à être accessible par la trappe d'accès (500) du poste d'entraînement (P1).

10. Machine-outil d'usinage à grande vitesse selon l'ensemble des revendications de 1 à 9 CARACTERISEE PAR LE FAIT QUE ses différents modules adoptent une forme sensiblement parallélépipédique et de même largeur que la machine assurant ainsi une parfaite symétrie par rapport à l'axe Z.

## Claims

1. Machine-tool for high speed machining (M) of the type comprising a mechanical module comprising a machining station (P2) and a driving station (P1) and an equipment module with "n" number different parts located up line, WHEREIN the bases of the said modules are connected to a common supporting frame (700), fixedly for the mechanical module and sliding on the longitudinal axis of the machine (M) for the equipment module, the different mobile parts of the said machine-tool adopting two positions :
- a first, so-called "folded" position, in which the equipment module and all its parts are placed against one another and against the mechanical module,
- a second, so-called "extended" position, in which the whole equipment module or a subset of its component parts have slid on the supporting frame towards the rear so as to form a transversal handling passage (100) running through and through the machine (M).

2. Machine-tool for high speed machining (M) according to claim 1, WHEREIN the length of the supporting frame (700) on which the equipment module slides is such that when this equipment module slides, partly or as a whole, towards the rear of the machine (M) and arrives at the end of its course to go from a folded position to an extended position, it opens a transversal passage (100) permitting handling between both modules and such that when the said equipment module slides, only partly in any direction, it opens the handling passage (100') between the separated parts and closes the passage previously open (100).

3. Machine-tool for high speed machining (M) according to claim 1, WHEREIN its equipment module is formed of two different parts, a hydraulic group (600) placed against the mechanical module when machine (M) is in its folded position and a subsec gathering a cooling group (300) and an electric cupboard (200) situated at the rear so that their respective movement creates two handling passages (100 and 100'), the first passage (100) opening between the mechanical module and the hydraulic group (600) and the second passage (100') opening between the hydraulic group (600) and the aforesaid subset.

4. Machine-tool for high speed machining (M) according to claim 1, of the type comprising a machining station (P2), a driving station (P1), a control station (P3) and a control desk (400), the different stations being connected to a unique and common communal supporting frame, WHEREIN the different stations are fixed to the said communal supporting frame so that the machining station (P2) and the driving station (P1) situated up line from it, are separated from the control station (P3) by a passage (100) running tranversally through the said machine and permitting access for an operator.

5. Machine-tool for high speed machining (M) according to claim 4, of the type of which the control station (P3) comprises a cooling group (300), WHEREIN the aforesaid cooling group (300) is situated and opens at the rear of the said machine-tool (M) so that an operator can have access to its controls.

6. Machine-tool for high speed machining according to claims 4 and 5, of the type of which the control station (P3) comprises a cooling group (300) and an electric cupboard (200), WHEREIN the aforesaid cupboard (200) comprising the electric components is situated between the cooling group (300) and the separating passage (100), its access doors opening onto the handling passage.

7. Machine-tool for high speed machining according to claims 1 to 6 taken together, WHEREIN the aforesaid driving station (P1) comprises in its rear an access hatch (500) opening onto the passage (100) between the control station (P3) and the driving station (P1).

8. Machine-tool for high speed machining according to claims 1 to 7 taken together, WHEREIN the aforesaid control desk (400) is mounted on a bracket (410) which is itself pivotally mounted on the frame of the machine-tool (M) permitting the aforesaid control desk (400) to close and/or to open, by rotation of its bracket (410), the handling passage (100).

9. Machine-tool for high speed machining according to claims 1 to 8 taken together, WHEREIN the hydraulic plate used to distribute the hydraulic power is situated in the driving station (P1) so that it is accessible by the access hatch (500) of the driving station (P1).

10. Machine-tool for high speed machining according to claims 1 to 9 taken together, WHEREIN its different modules adopt a slightly parallepipedic shape of the same width as the machine, thus ensuring a perfect symmetry about axis Z.

## Patentansprüche

1. Hochgeschwindigkeits-Werkzeugmaschine (M) vom Typ die ein mechanisches Modul aufweist mit einer Bearbeitungsstation (P2) und mit einer Antriebsstation (P1) und ein Ausrüstungsmodul aufweist mit n voneinander getrennten Abschnitten, welches davor angeordnet ist, dadurch gekennzeichnet, dass die Grundteile der Module mit demselben Tragchassis (700) verbunden sind, wobei das mechanische Modul feststeht und das Ausrüstungsmodul entlang der Längsachse der Maschine (M) gleitend ist und wobei die verschiedenen beweglichen Abschnitte der Werkzeugmaschine zwei Stellungen einnehmen:
- eine erste 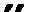 zusammengeschobene" Stellung, in der das Ausrüstungsmodul und alle seine Abschnitte aneinander angrenzen sowie an das mechanische Modul und
- eine zweite 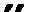 auseinandergezogene" Stellung, in der das Ausrüstungsmodul in seiner Gesamtheit oder eine Unteranordnung der es bildenden Bauteile entlang des Tragchassis nach hinten derart verschoben worden sind, dass ein in Querrichtung verlaufender Handhabungskorridor (100) entstanden ist, der die Maschine (M) von einer Seite zur anderen Seite durchsetzt.

2. Hochgeschwindigkeits-Werkzeugmaschine (M) nach Anspruch 1, dadurch gekennzeichnet, dass die Länge des Tragchassis (700), auf welcher das Ausrüstungsmodul gleitet, derart ist, dass, wenn letzteres in seiner Gesamtheit oder teilweise zum rückwärtigen Teil der Maschine (M) gleitet und seine Endstellung einnimmt, um aus der zusammengeschobenen Stellung in die auseinandergezogene Stellung zu gelangen, ein in Querrichtung verlaufender Korridor (100) entsteht, der die Handhabung zwischen den beiden Modulen ermöglicht, dergestalt, dass, wenn das Ausrüstungsmodul nur teilweise in eine beliebige Richtung gleitet, ein Handhabungskorridor (100') zwischen den voneinander getrennten Anschnitten entsteht und der vorher geöffnete Korridor (100) geschlossen wird.

3. Hochgeschwindigkeits-Werkzeugmaschine (M) nach Anspruch 1, dadurch gekennzeichnet, dass sein Ausrüstungsmodul sich aus zwei getrennten Anschnitten zusammensetzt und zwar eine hydraulische Gruppe (600), die während der zusammengeschobenen Stellung der Maschine an das mechanische Modul angrenzt und eine Unteranordnung, die eine Kühlgruppe (300) und einen elektrischen Schrank (200) umfaßt, und die im rückwärtigen Teil derart angeordnet ist, dass bei ihren entsprechenden Bewegungen zwei Handhabungskorridore (100 und 100') entstehen, wobei der erste (100) zwischen dem mechanischen Modul und der hydraulischen Gruppe 600) und der zweite zwischen der hydraulischen Gruppe 600) und der genannten Unteranordnung entsteht.

4. Hochgeschwindigkeits-Werkzeugmaschine (M) nach Anspruch 1 vom Typ der eine Bearbeitungsstation (P2), eine Antriebsstation (P1), eine Steuerstation (P3) und ein Steuerpult (400) aufweist, wobei die verschiedenen Stationen mit ein- und demselben gemeinsamen Tragschassis verbunden sind, dadurch gekennzeichnet, dass die verschiedenen Stationen mit dem gemeinsamen Tragchassis derart verbunden sind, dass die Bearbeitungsstation (P2) und die Antriebsstation (P1), die vor ihr angeordnet ist, von der Steuerstation (P3) durch einen Korridor getrennt sind, welcher die Maschine in Querrichtung durchsetzt und einen Durchlaß für eine Bedienungsperson bildet.

5. Hochgeschwindigkeits-Werkzeugmaschine nach Anspruch 4 vom Typ bei dem die Steuerstation eine Kühlgruppe (300) umfaßt, dadurch gekennzeichnet, dass diese Kühlgruppe (300) im rückwärtigen Teil der Werkzeugmaschine (M) angeordnet ist und sich in dieser Richtung öffnet, um so den Zugang zu den Steuerungen zu ermöglichen.

6. Hochgeschwindigkeits-Werkzeugmaschine nach Ansprüchen 4 und 5 vom Typ bei dem die Steuerstation (P3) eine Kühlgruppe (300) und einen elektrischen Schrank (200) umfaßt, dadurch gekennzeichnet, dass dieser Schrank (200), der elektrische Bauteile enthält, zwischen der Kühlgruppe (300) und dem Trennkorridor (100) angeordnet ist, wobei seine Türen sich zum Handhabungskorridor (100) hin öffnen.

7. Hochgeschwindigkeits-Werkzeugmaschine nach Ansprüchen 1 bis 6 in ihrer Gesamtheit, dadurch gekennzeichnet, dass die Antriebsstation (P1) auf ihrer Rückseite eine Zugangsluke (500) aufweist, die seitlich in den Korridor (100) mündet zwischen der Antriebsstation (P1) und der Steuerstation (P3).

8. Hochgeschwindigkeits-Werkzeugmaschine nach Ansprüchen 1 bis 7 in ihrer Gesamtheit, dadurch gekennzeichnet, dass das Steuerpult (400) auf einem Podest (410) angeordnet ist, das bezüglich des Rahmens der Werkzeugmaschine (M) schwenkbar ist, sodass das Steuerpult (400) durch Drehung des Podestes (410) den Zugang zum Handhabungskorridor (100) verschließen und/oder freigeben kann.

9. Hochgeschwindigkeits-Werkzeugmaschine nach Ansprüchen 1 bis 8 in ihrer Gesamtheit, dadurch gekennzeichnet, dass die hydraulische Platine zur Verteilung der hydraulischen Energie in der Antriebsstation (P1) derart angeordnet ist, dass sie durch die Zugangsluke (500) der Antriebsstation (P1) hindurch zugänglich ist.

10. Hochgeschwindigkeits-Werkzeugmaschine nach der Gesamtheit der Ansprüche 1 bis 9, dadurch gekennzeichnet, dass die verschiedenen Module eine im wesentliche parallelepipedförmige Gestalt annehmen mit gleicher Breite wie die Maschine und dadurch eine perfekte Symmetrie bezüglich der Z-Achse gewährleisten.
